# EUROPÄISCHE PATENTSCHRIFT

(11) **EP 3 081 089 B1**
(45) Veröffentlichungstag und Bekanntmachung des Hinweises auf die Patenterteilung: **19.09.2018**
(21) Anmeldenummer: 15163850.9
(22) Anmeldetag: 16.04.2015
(51) Int. Cl.: A22C 11/10, A21C 11/10, A21C 9/08

(54) **VORRICHTUNG UND VERFAHREN ZUM FORMEN VON LEBENSMITTELPRODUKTEN**
METHOD AND DEVICE FOR MOULDING FOOD PRODUCTS
DISPOSITIF ET PROCÉDÉ DESTINÉS À FORMER DES PRODUITS ALIMENTAIRES

(43) Veröffentlichungstag der Anmeldung: 19.10.2016
(73) Patentinhaber: Albert Handtmann Maschinenfabrik GmbH & Co. KG, 88400 Biberach (DE)
(72) Erfinder: Baechtle, Manfred, 88433 Schemmerhofen (DE); Cret, Claudiu, 88348 Bad Saulgau (DE); Teufel, Daniel, 88433 Schemmerhofen (DE)
(74) Vertreter: Grünecker Patent- und Rechtsanwälte PartG mbB

(56) Entgegenhaltungen:
- EP-A1- 2 789 239
- EP-A2- 0 194 863
- EP-B1- 1 576 883
- DE-U1-202005 007 176
- US-A- 3 797 069

## Beschreibung

Die Erfindung betrifft eine Formvorrichtung zum Formen und Unterteilen eines pastösen Lebensmittelstrangs, eine Füllmaschine zum Herstellen geformter Lebensmittel, sowie ein Verfahren zum Herstellen geformter Lebensmittelprodukte.

Eine solche Formvorrichtung gemäß dem Oberbegriff des Anspruchs 1 ist bereits aus der EP 0 194 863 A2 bekannt. Diese Druckschrift beschreibt bereits das Abscheiden von viskosem Material auf eine Fördereinrichtung. Dazu sind zwei Formplatten linear gegeneinander bewegbar, um den Querschnitt der Durchgangsöffnung zu verändern und das Material abzuscheren.

Es sind bereits unterschiedliche Verfahren zum Formen von pastösen Produkten in der Lebensmittelindustrie bekannt. So ist beispielsweise in der EP 1 576 883 B1 ein Verfahren beschrieben, bei dem zwei Formplatten linear gegeneinander bewegt werden, um den Querschnitt der Durchgangsöffnung zu verändern.

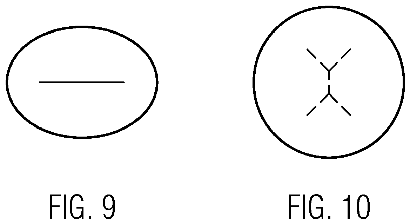

Dieses Verfahren bringt jedoch Probleme bei der Erzeugung von abgerundeten Lebensmittelprodukten mit sich, wie beispielsweise Kugeln, oder zylindrischen Formteilen mit abgerundeten Enden oder tropfenförmigen Produkten. Dies liegt daran, dass durch die Bewegung der beiden Messer zueinander am extrudierten Strang schlitzartige, katzenaugenförmige Querschnitte erzeugt werden. Die Portionsenden sind somit nicht rund wie insbesondere aus Fig. 9 hervorgeht.

Zum Erzeugen von abgerundeten Enden werden beispielsweise auch bereits sogenannte Diaphragmen verwendet, die mehrere Abteilelemente aufweisen, die sich in Form einer Irisblende auf und zu bewegen können. Eine entsprechende Vorrichtung besteht aus sehr vielen Einzelteilen. Das Handling, d. h. die Montage, Demontage und Reinigung, gestalten sich somit schwierig. Außerdem kann das Diaphragma nicht so verschlossen werden, dass sich die einzelne Teile überlagern, das bedeutet, dass diese Vorrichtung nicht geeignet ist, einen Lebensmittelstrang zu durchtrennen, d. h. abzuschneiden. Eine entsprechende Vorrichtung wird oftmals einbahnig betrieben. Soll die Produktion mehrbahnig erfolgen, so ist eine Parallelschaltung mehrerer einzelner Diaphragmen notwendig. Die Anzahl der benötigten Teile steigt entsprechend stark an. Solche Ausführungen sind dann für den Bediener nur sehr aufwändig zu montieren und zu demon tieren und außerdem sehr kostenintensiv. Eine entsprechende Vorrichtung ist beispielsweise aus der WO 2013/139853 A1 bekannt.

Ausgehend von dem zuvor genannten Stand der Technik liegt der vorliegenden Erfindung die Aufgabe zugrunde, eine Vorrichtung und ein Verfahren bereitzustellen, die ein einfaches Formen und Unterteilen eines pastösen Lebensmittelstrangs ermöglichen, wobei gleichzeitig eine verbesserte Formgebung möglich ist.

Erfindungsgemäß wird die Aufgabe durch die Merkmale der Ansprüche 1, 13 und 17 gelöst.

Die Formvorrichtung zum Formen und Unterteilen eines pastösen Lebensmittelstrangs gemäß der vorliegenden Erfindung weist mehr als zwei in Transportrichtung des Lebensmittelstrangs übereinander liegende flache Verdrängerelemente auf. Die flachen Verdrängerelemente liegen dicht aufeinander, so dass sie aneinander vorbei gleiten können und damit auch den Füllgutstrang abtrennen, d. h. abschneiden können. Vorzugsweise sind die flachen Verdrängerelemente als flache Verdrängerplatten ausgebildet. Die flachen Verdrängerelemente weisen jeweils mindestens eine Öffnung auf, durch die der Lebensmittelstrang in Transportrichtung transportiert werden kann. Darüber hinaus weist die Erfindung einen Bewegungsmechanismus auf zum Bewegen der flachen Verdrängerelemente auf einer jeweiligen gekrümmten Bahn, derart, dass die jeweiligen Öffnungen relativ zueinander bewegbar sind. Somit sind die jeweiligen Öffnungen relativ zueinander bewegbar, so dass sich die Querschnittsfläche der resultierenden Gesamtöffnung der sich überlagernden Öffnungen ändert.

Dadurch, dass mehr als zwei flache Verdrängerelemente mit entsprechenden Öffnungen verwendet werden, die auf einer gekrümmten Bahn bewegt werden, entsteht im Gegensatz zum Stand der Technik nicht nur eine katzenförmige Gesamtöffnung, sondern ein vorzugsweise abgerundetes Vieleck, dessen Größe in Abhängigkeit der Bewegung der flachen Verdrängerelemente auf ihrer gekrümmten Bahn variieren kann. Das heißt z.B., dass (bei sich anfänglich vollständig überlagernden Öffnungen), bei Bewegung der Verdrängerelemente auf einer gekrümmten Bahn aus einer anfänglich runden Gesamtöffnung ein abgerundete Vieleck entsteht, das eine schönere abgerundete Form als im Stand der Technik erzeugen kann.

Dadurch, dass die flachen Verdrängerelemente mit dem Bewegungsmechanismus bewegt werden und mit ihren Öffnungen aneinander vorbei gleiten können, können die flachen Verdrängerelemente den Lebensmittelstrang nicht nur formen, sondern auch komplett abschneiden. Auf ein gesondertes Schneidwerkzeug kann somit verzichtet werden. Die erfindungsgemäße Vorrichtung kann einfach gefertigt werden, und ist einfach handzuhaben und zu reinigen. Die Formvorrichtung kann einfach an dem Ausstoßende einer Füllmaschine platziert werden, derart, dass der Mittelpunkt der Gesamtöffnung und der Mittelpunkt der Ausstoßöffnung für den pastösen Lebensmittelstrang fluchten. Somit kann die erfindungsgemäße Formvorrichtung auch einfach nachgerüstet werden. Die erfindungsgemäße Formvorrichtung kann darüber hinaus äußerst platzsparend in bestehende Systeme integriert werden. Mit ein und derselben Vorrichtung können durch unterschiedliches Ansteuern des Bewegungsmechanismus und entsprechender Ausstoßgeschwindigkeiten unterschiedliche Produktformen hergestellt werden, ohne dass ein mechanisches Umrüsten notwendig ist. Bereits drei flache Verdrängerelemente ergeben wesentliche Vorteile. Vorzugsweise werden 3 bis 6, noch vorteilhafter 3 bis 4 Verdrängerelemente eingesetzt.

Der Bewegungsmechanismus ist derart ausgebildet, dass die flachen Verdrängerelemente in eine Abtrennposition A bewegbar sind, in der die Öffnungen derart zueinander ausgerichtet sind, dass die Querschnittsfläche der Gesamtöffnung Null ist, d. h. dass keine freie Gesamtöffnung mehr vorhanden ist und der Lebensmittelstrang abgetrennt wird. Die flachen Verdrängerelemente sind aus dieser Position auch in eine Öffnungsposition O bewegbar, in der die Querschnittsfläche der Gesamtöffnung einen vorbestimmten maximalen Querschnitt aufweist. Dieser Querschnitt entspricht dann dem maximalen Querschnitt des Produkts. Dabei entspricht der vorbestimmte maximale Querschnitt vorzugsweise dem Querschnitt der Öffnungen, wenn diese sich maximal überlagern, d. h., deren Mittelpunkte fluchtend zum Mittelpunkt des Lebensmittelstrangs bzw. einer entsprechenden Ausstoßöffnung angeordnet sind. Somit können durch die Bewegung der flachen Verdrängerelemente von einer Abtrennposition zu einer Öffnungsposition und einer Bewegung zurück zur Abtrennposition in Abhängigkeit der Geschwindigkeit des Lebensmittelstrangs Produkte mit unterschiedlichen abgerundeten Formen erzeugt werden, wie beispielsweise Kugeln, zylindrische Formteile mit abgerundeten Enden oder tropfenförmige Produkte.

Bei der Bewegung von n flachen Verdrängerelementen, wobei n e IN, und n > 2, aus der Öffnungsposition O in die Abtrennposition A können sich die Kanten der Öffnungen, die die Gesamtöffnung begrenzen, von n Seiten in Richtung Mittelpunkt M der Gesamtöffnung bewegen. Bei der Bewegung der flachen Verdrängerelemente aus der Abtrennposition A in die Öffnungsposition O können sich die Kanten der Öffnungen nach n Seiten vom Mittelpunkt wegbewegen. Somit können gleichmäßige, schöne abgerundete Formen erzeugt werden.

Vorteilhafterweise weisen die Öffnungen in den flachen Verdrängerelementen eine Querschnittsfläche auf, die ca. 10% kleiner bis 10 % größer als die Querschnittsfläche des zugeführten Lebensmittelstrangs bzw. der den Lebensmittelstrang erzeugenden Ausstoßöffnung ist und vorzugsweise etwa gleich groß ist. Somit kann eine maximale Gesamtöffnung vorgesehen werden, die zumindest den Querschnitt der Ausstoßöffnung einer entsprechenden Zuführung aufweist, so dass es zu keinem Aufstauen des Lebensmittelstrangs kommt. Die resultierende Fläche der Gesamtöffnung sollte nicht größer sein, als die der Ausstoßöffnung des Lebensmittelstrangs, damit das Lebensmittel nicht seitlich am Rand der Öffnung austritt.

Vorzugsweise weisen die Öffnungen einen geschlossenen Umfang auf, so dass mehrere Öffnungen in einer Reihe angeordnet werden können. Vorzugsweise sind die Öffnungen rund oder oval ausgebildet, weisen aber zumindest gekrümmte Abschnitte auf, die dann die Kanten der Gesamtöffnung bilden, um eine schöne abgerundete Form des Produkts erzeugen zu können.

Wenn die Verdrängerelemente jeweils mehrerere nebeneinander angeordnete Öffnungen für mehrere entsprechende Lebensmittelstränge aufweisen, können mit nur einer Formvorrichtung und einem entsprechenden Bewegungsmechanismus mehrere geformte Lebensmittelprodukte auf einfache kostengünstige Weise parallel zueinander erzeugt werden.

Der Bewegungsmechanismus umfasst vorzugsweise mindestens ein Drehteil, insbesondere eine drehbare Scheibe, an dem oder denen die flachen Verdrängerelemente drehbar gelagert sind. Somit können die Verdrängerelemente gemäß einem bevorzugten Ausführungsbeispiel gleichzeitig durch Verwendung eines Drehteils auf einer gekrümmten Bahn bewegt werden, was einfach und kostengünstig zu realisieren ist. Die flachen Verdrängerelemente sind dabei z.B. um den Umfang des Drehteils verteilt angeordnet, vorzugsweise in gleichen Abständen. Somit ergeben sich für die unterschiedlichen Verdrängerelemente bei einem bestimmten Drehwinkel des Drehteils d.h. in einem vorbestimmten Zeitintervall unterschiedliche gekrümmte Bahnen mit unterschiedlichen Bewegungsrichtungen derart, dass sich die Öffnungen in den flachen Verdrängerelementen relativ zueinander bewegen können.

Es ist möglich, dass die Verdrängerelemente an ihren beiden gegenüberliegenden Endbereichen an einem jeweiligen Drehteil drehbar gelagert sind. Dabei kann beispielsweise ein Drehteil angetrieben sein und das weitere Drehteil sich zur Führung frei mitdrehen.

Es sollte zumindest ein Drehteil antreibbar sein. Es ist vorteilhaft, wenn dieses Drehteil in zwei Drehrichtungen antreibbar ist, da beispielsweise bei der Ankopplung von mehreren Verdrängerelementen auf einer Seite eines Drehteils eine Kollision eines Verdrängerelements mit einer Ankopplungsachse eines nachfolgenden Verdrängerelements möglich ist. Ist das Drehteil in zwei Drehrichtungen antreibbar, kann die Vorrichtung beispielsweise in einer ersten Drehrichtung von einer Öffnungsposition in die Abtrennposition bewegt werden und in einer entgegengesetzten Drehrichtung zurück aus der Abtrennposition in die Öffnungsposition verdreht werden. Somit kann eine Kollision verhindert werden. Darüber hinaus muss sich das Drehteil in einem Winkelbereich (z.B. 0° - 110°) zwischen Abtrennposition und maximaler Öffnungsposition bewegen. Es ist jedoch auch möglich, dass mehrere Drehteile antreibbar sind.

Weiter ist es möglich, dass der Bewegungsmechanismus mehrere Drehteile an einer Seite von den beiden Seiten zwischen denen die Verdrängerelemente geführt sind, aufweist. An einer Vorder- oder Rückseite der Drehteile ist jeweils höchstens ein flaches Verdrängerelement an seinem Endbereich angekoppelt. An seinem anderen Endbereich kann das jeweilige Verdrängerelement über eine entsprechende Führung (z.B. auch mitlaufende Drehteile auf deren Vorder-oder Rückseite auch stets höchstens ein Verdrängerelement angekoppelt ist) auf der entsprechenden Bahn mitgeführt werden. Eine entsprechende Anordnung erlaubt, dass das Drehteil sich kontinuierlich in eine Richtung bewegen kann, ohne dass es zu der zuvor genannten Kollision kommt. Der Antrieb der mehreren Drehteile kann gekoppelt von einem Motor erfolgen. Es können jedoch auch zwei oder mehrere getrennte Motoren verwendet werden, wobei dann die Form der zu erzeugenden Produkte noch weiter beeinflusst werden kann.

Es ist auch möglich, dass die Ankopplungspunkte der flachen Verdrängerelemente auf den Drehteil unterschiedliche Abstände zur Mittelachse des Drehteils aufweisen. Somit kann wiederum die Form des Produkts weiter beeinflusst werden. Eine weitere Möglichkeit ist, dass die Öffnungen in den flachen Verdrängerelementen nicht rund sind, sondern eine davon abweichende Form aufweisen. Wenn die Ankopplungspunkte dann auch noch auf unterschiedlichen Radien umlaufen und die Antriebsgeschwindigkeit des Drehteils entsprechend eingestellt wird, können Produkte in einer bestimmten Form erzeugt werden.

Vorteilhafterweise weist die Vorrichtung eine Steuerung auf, die in Abhängigkeit der Stellung der flachen Verdrängerelemente die Ausstoßgeschwindigkeit des Lebensmittelstrangs einstellen kann. Durch Korrelation der Ausstoßgeschwindigkeit und der Stellung der flachen Verdrängerelemente zu einem bestimmten Zeitpunkt kann die Form der Produkte exakt eingestellt werden.

Erfindungsgemäß ist eine Füllmaschine vorgesehen zum Herstellen geformter Lebensmittel mit einer Formvorrichtung zum Formen und Unterteilen eines Lebensmittelstrangs nach mindestens einem der Ansprüche 1 bis 12. Die Füllmaschine weist einen Fülltrichter zur Aufnahme der pastösen Lebensmittelmasse auf, sowie eine Fördereinrichtung, z. B. eine Flügelzellenpumpe, die die pastöse Lebensmittelmasse in ein Abfüllorgan, z. B. ein Füllrohr oder einen Füllstromteiler - mit mindestens einer Ausstoßöffnung fördert. Die Verdrängerelemente sind dann in Transportrichtung direkt hinter der Ausstoßöffnung angeordnet. Die Verdrängerelemente sind so nah an der Ausstoßöffnung angeordnet, dass ausreichend Spiel ist, dass das flache Verdrängerelement ungehindert an der Auslauföffnung vorbei gleiten kann.

Vorteilhafterweise ist die Führung der Verdrängerelemente derart ausgebildet, dass der Mittelpunkt M der jeweiligen Gesamtöffnung der sich überlagernden Öffnungen und der Mittelpunkt der jeweiligen Ausstoßöffnung des Abfüllorgans fluchtend angeordnet sind. Somit kann eine schöne symmetrische Form erzeugt werden, wobei die pastöse Masse gleichmäßig über den Gesamtquerschnitt der Ausstoßöffnung ausgestoßen werden kann, ohne dass es zu partiellen Aufstauungen kommt.

Vorteilhafterweise weist das Abfüllorgan der Füllmaschine einen Füllstromteiler auf, durch den die pastöse Lebensmittelmasse zu mehreren Ausstoßöffnungen gefördert wird. Dann haben auch die flachen Verdrängerelemente jeweils mehrere entsprechende Öffnungen, die zu den Ausstoßöffnungen des Füllstromteilers ausgerichtet sind. Somit können auf einfache Art und Weise mehrere Produkte parallel gefertigt werden.

Vorteilhafterweise umfasst die Füllmaschine eine Steuereinrichtung, die den Bewegungsmechanismus und die Fördereinrichtung ansteuert. Dabei kann die Füllmaschine eine Steuerung aufweisen, die in der Füllmaschine angeordnet ist, und die sowohl den Bewegungsmechanismus als auch die Fördereinrichtung ansteuert. Es ist auch möglich, dass die Füllmaschine eine eigene Steuereinrichtung aufweist und der Bewegungsmechanismus über eine separate Steuerung angesteuert wird und vorzugsweise die beiden Steuerungen miteinander gekoppelt sind, um die Funktionen des Bewegungsmechanismus, insbesondere die Stellung der einzelnen Verdrängerelemente in Abhängigkeit der Zeit sowie die Funktionen der Fördereinrichtung, insbesondere die Fördergeschwindigkeit aneinander in Abhängigkeit einer gewünschten Produktform anzupassen.

Bei dem erfindungsgemäßen Verfahren wird der Bewegungsmechanismus derart angesteuert, dass mehr als zwei flache Verdrängerelemente aus einer Abtrennposition in eine Öffnungsposition auf einer gekrümmten Bahn bewegt werden, wobei sich die flachen Verdrängerelemente in der Abtrennposition derart überlagern, dass die Querschnittsfläche der resultierenden Gesamtöffnung der sich überlagernden Öffnungen Null ist und in der Öffnungsposition die Querschnittsfläche der Gesamtöffnung einen vorbestimmten maximalen Querschnitt aufweist. Die flachen Verdrängerelemente können dann von dieser Öffnungsposition wieder auf einer gekrümmten Bahn in die Abtrennposition bewegt werden. In der Abtrennposition wird jeweils der Lebensmittelstrang durchtrennt, so dass Einzelprodukte erzeugt werden. Während der Bewegung der Verdrängerelemente zwischen den Abtrennpositionen wird die pastöse Lebensmittelmasse durch die Ausstoßöffnung des Abfüllorgans und durch die sich daran anschließende erweiternde oder verjüngende Gesamtöffnung der flachen Verdrängerelemente hindurch bewegt.

Vorteilhafterweise wird die pastöse Lebensmittelmasse kontinuierlich oder portionsweise ausgestoßen, wobei vorteilhafterweise in der Abtrennposition die Relativgeschwindigkeit des Lebensmittelstrangs zu den flachen Verdrängerelementen in Transportrichtung T herabgesetzt wird, vorzugsweise auf 0 reduziert wird.

Dies kann entweder so realisiert werden, indem die Lebensmittelmasse portionsweise ausgestoßen wird, wobei, wenn die Verdrängerelemente in der Abtrennposition sind, der Lebensmittelstrom gestoppt wird, oder zumindest herabgesetzt wird, derart, dass sich das Lebensmittel an den Verdrängerelementen nicht aufstaut. Es ist jedoch auch möglich, dass die Formvorrichtung in einem gewissen Bereich in Transportrichtung T mitlaufend ausgebildet ist, d. h. dass sich die Abteileinrichtung mit im Wesentlichen in gleicher Geschwindigkeit wie der Füllgutstrang bewegen kann, um ein Aufstauen des Produkts zu verhindern. Dazu muss dann das Ausstoßorgan teleskopartig gestaltet sein, so dass das oberste Abteilelement und die Ausstoßöffnung immer dicht beieinander liegen.

Zum Abtrennen des Lebensmittelstrangs können die Öffnungen sich derart überlagern, dass die Kanten, die die jeweiligen Öffnungen begrenzen, aneinander vorbeigleiten derart, dass das Lebensmittelprodukt abgeschnitten wird. D.h., dass die Verdrängerelemente zunächst so auf ihrer gekrümmten Bahn bewegt werden, dass die Gesamtöffnung sich mit der Bewegung verkleinert bis die Fläche der Gesamtöffnung Null wird und die Verdrängerelemente dann noch weiter auf der Bahn bewegt werden bis das Lebensmittelprodukt von den Kanten, die sich aneinander vorbeibewegen, abgeschnitten wird. Dies ist insbesondere für faserige Lebensmittel vorteilhaft. Es ist aber auch möglich, dass die Verdrängerelemente nur soweit auf der gekrümmten Bahn bewegt werden, bis die Fläche der Gesamtöffnung Null wird. Eine entsprechende Führung ist beispielweise bei Lebensmitteln mit homogener Konsistenz ausreichend, wie beispielsweise bei Kartoffelteig.

Die vorliegende Erfindung wird nachfolgend unter Bezugnahme der folgenden Figuren näher erläutert.
- Fig. 1: zeigt grobschematisch eine Seitenansicht einer Füllmaschine mit einer Formvorrichtung gemäß der vorliegenden Erfindung.
- Fig. 2: zeigt grobschematisch eine Aufsicht auf einen Füllstromteiler mit einer Formvorrichtung.
- Fig. 3: zeigt grobschematisch eine Seitenansicht auf eine Formvorrichtung mit drei flachen Verdrängerelementen.
- Fig. 4: A-4F zeigen die Bewegung der Verdrängerelemente auf ihrer gekrümmten Bahn von einer Öffnungsposition zu einer Abtrennposition.
- Fig. 5: zeigt eine Seitenansicht auf eine Formvorrichtung gemäß der vorliegenden Erfindung mit vier Verdrängerelementen.
- Fig. 6: A-6F zeigen grobschematisch die Bewegung der Verdrängerelemente von einer Öffnungsposition in eine Abtrennposition.
- Fig. 7: zeigt einen Querschnitt durch eine Formvorrichtung mit vier Verdrängerelementen gemäß einer bevorzugten Ausführungsform.
- Fig. 8: zeigt einen Querschnitt durch eine Formvorrichtung gemäß einem weiteren Ausführungsbeispiel.
- Fig. 9: zeigt ein geformtes Produkt nach dem Stand der Technik.
- Fig. 10: zeigt ein geformtes Produkt, das mit einer Formvorrichtung gemäß der vorliegenden Erfindung erzeugt wurde.

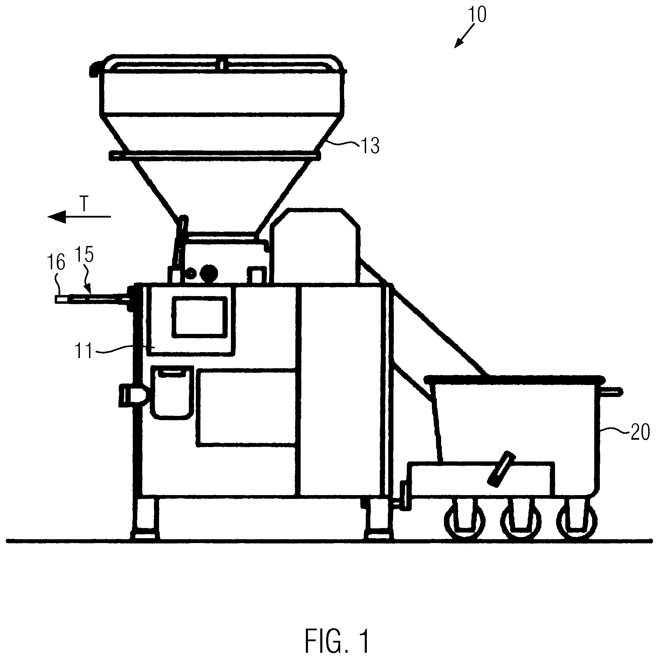

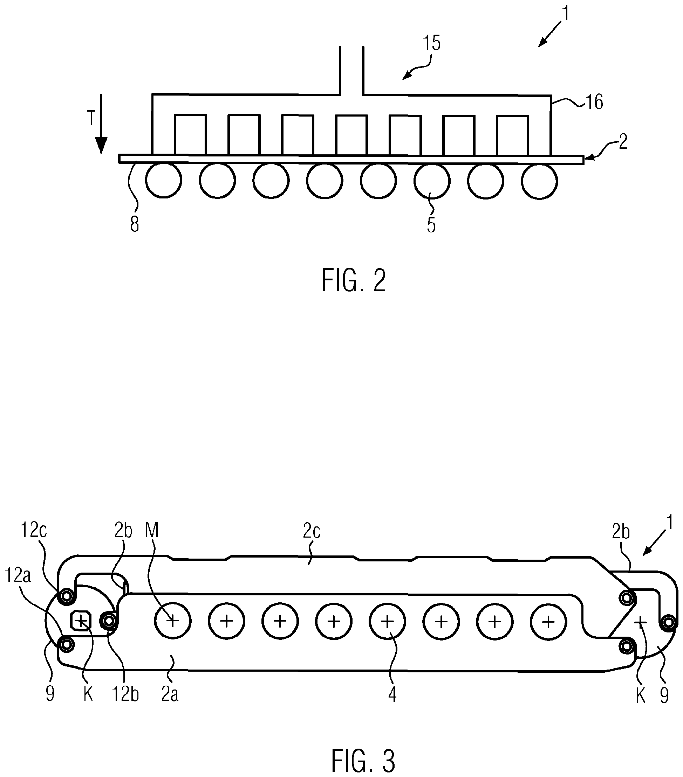

Fig. 1 zeigt grob schematisch eine Seitenansicht einer Füllmaschine 10 gemäß der vorliegenden Erfindung. Die Füllmaschine 10 weist einen Trichter 13 auf, zur Aufnahme von pastöser Masse, d. h. von pastösem Lebensmittel, wie beispielsweise Wurstbrät oder Kartoffelmasse etc.. Das pastöse Lebensmittel kann beispielsweise über einen Brätwagen 20 und einer entsprechenden Hubeinrichtung angehoben und in den Trichter 13 eingekippt werden. Unterhalb des Trichters 13 befindet sich ein nicht eigens dargestelltes Förderwerk, insbesondere eine Flügelzellenpumpe, die das pastöse Lebensmittel in ein Füllorgan 15 schiebt. Das Füllorgan 15 kann beispielsweise ein Füllrohr umfassen, aus dem das Lebensmittel ausgestoßen wird. Das Füllorgan kann, wie insbesondere aus Fig. 2 hervorgeht, einen Füllstromteiler 16 umfassen, der den Füllstrom aufteilt und aus mehreren Ausstoßöffnungen 8 parallel zueinander ausstößt. Die Füllmaschine weist weiter eine Steuerung 11 auf, sowie ein Display 21.

Um den ausgestoßenen Lebensmittelstrang zu formen, ist erfindungsgemäß eine Formvorrichtung 1 vorgesehen, die, wie insbesondere aus Fig. 2 hervorgeht, dicht an den Ausstoßöffnungen 8 des Füllstromteilers, oder aber der Ausstoßöffnung 8 des Füllrohrs, angeordnet ist.

Die Formvorrichtung weist mindestens drei in Transportrichtung T des Lebensmittelstrangs übereinander liegende Verdrängerelemente 2a, b, c auf, wie beispielsweise aus Fig. 3 hervorgeht, die eine Formvorrichtung mit drei flachen Verdrängerelementen, hier: drei flachen Verdrängerplatten, zeigt. Die jeweiligen Verdrängerelemente 2a, b, c weisen jeweils mindestens eine Öffnung 3a, b, c, d auf. In dem in Fig. 3 gezeigten Ausführungsbeispiel weisen die jeweiligen Verdrängerelemente 2a, b, c insgesamt acht Öffnungen 3a, b, c auf, die jeweils nebeneinander auf den jeweiligen Verdrängerelementen angeordnet sind.

Die Formvorrichtung 1 weist weiter einen Bewegungsmechanismus 6 auf zum Bewegen der flachen Verdrängerelemente 2a, b, c auf jeweiligen gekrümmten Bahnen, derart, dass sich die jeweiligen Öffnungen 3a, b, c relativ zueinander bewegen können, so dass sich die Querschnittsfläche der resultierenden Gesamtöffnung 4 der sich überlagernden Öffnungen 3a, b, c ändert. Der Bewegungsmechanismus 6 weist in diesem Ausführungsbeispiel beispielsweise ein Drehteil, hier: eine drehbare Scheibe 9, auf, an deren Seitenfläche die flachen Verdrängerelemente 2a, b, c an Ankopplungspunkten 12a, b, c beispielsweise mit je einem Bolzen drehbar gelagert sind. Wie insbesondere aus Fig. 3 hervorgeht, sind die flachen Verdrängerelemente 2a, b, c an einem zweiten Drehteil, hier: Drehscheibe, an ihren gegenüberliegenden Enden ebenfalls an entsprechenden Ankopplungspunkten, beispielsweise über Bolzen, drehbar gelagert. Die Verdrängerelemente sind hier gleichmäßig um den Umfang des Drehteils 9 verteilt angeordnet, d. h. hier z. B. jeweils im Abstand von 120°.

Bei diesem Ausführungsbeispiel ist zumindest eines der Drehteile, hier: z. B. das in Fig. 3 gezeigte linke Drehteil 9, angetrieben, beispielsweise durch einen nicht dargestellten Motor, insbesondere Servomotor. Das auf der anderen Seite der Verdrängerelemente 2a, b, c angeordnete Drehteil dient dann lediglich zur Führung. Anstelle dieses Drehteils könnte auch eine entsprechende Kurvenführung etc. vorgesehen sein.

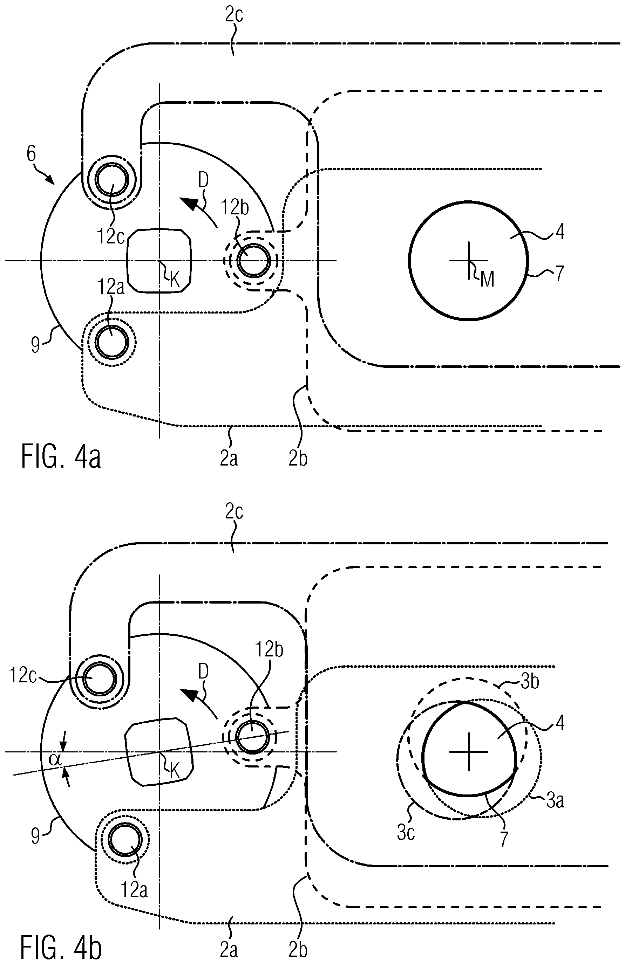

Fig. 4A zeigt einfachheitshalber nur einen Teilbereich der Formvorrichtung, mit den Verdrängerelementen 2a, b, c, d in einer Öffnungsposition O, in der die Querschnittsfläche der Gesamtöffnung 4 einen vorbestimmten maximalen Querschnitt aufweist. In diesem besonderen Ausführungsbeispiel überlagern sich dabei die einzelnen Öffnungen 3a, b, c der Verdrängerelemente 2a, b, c vollständig. Der Mittelpunkt M der resultierenden Gesamtöffnung 4 und der Mittelpunkt M der Ausstoßöffnung 8 des Ausstoßorgans fluchten miteinander. Die maximale Gesamtöffnung 4 weist dabei eine Querschnittsfläche auf, die in etwa der Querschnittsfläche des zugeführten Lebensmittelstrangs 5, bzw. der den Lebensmittelstrang erzeugenden Ausstoßöffnung 8 entspricht. Somit kann ein Aufstauen des Lebensmittelstrangs verhindert werden. Der Lebensmittelstrang kann durch die Ausstoßöffnung 8 hindurch durch die Gesamtöffnung 4 ausgestoßen werden. Das der Ausstoßöffnung 8 zugewandte Verdrängerelement bewegt sich dicht an der Ausstoßöffnung entlang mit so viel Spiel, dass das Verdrängerelement ungehindert über die Öffnung gleiten kann.

Aus der in der Fig. 4A gezeigten Öffnungsposition können sich die einzelnen Verdrängerelemente 2a, b, c entlang einer gekrümmten Bahn bewegen, in dem sich das Drehteil 9 in Drehrichtung D dreht. Fig. 4B zeigt die in Fig. 4A gezeigte Formvorrichtung, bei der sich das Drehteil um einen Winkel α in Drehrichtung D, hier: nach links, um die Mittelachse K gedreht hat.

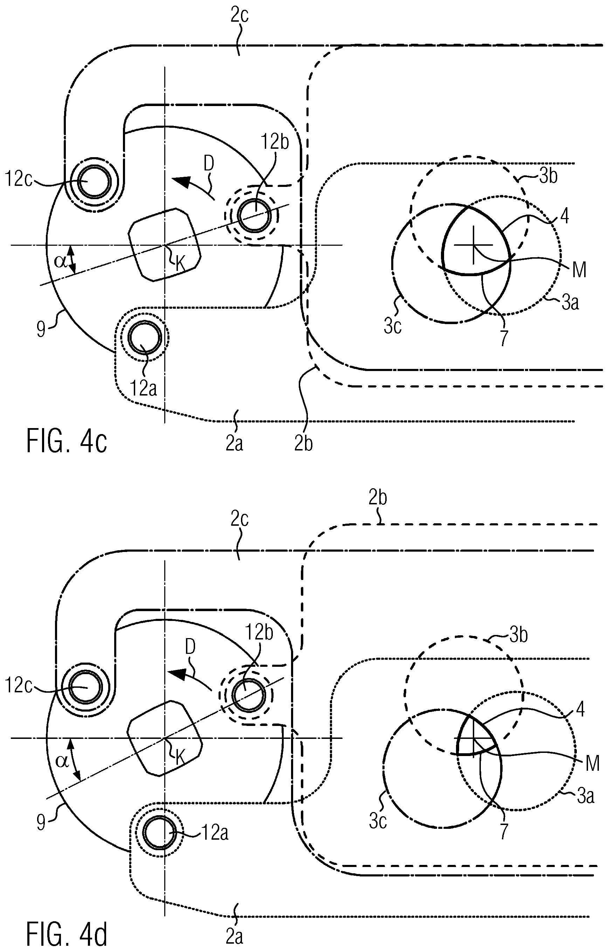

Wie in Fig. 4B erkannt werden kann, bewegen sich bei der Bewegung der Verdrängerelemente entlang der gekrümmten Bahn auch die Öffnungen 3a, b, c. Da die Verdrängerelemente 2a, b, c verteilt am Umfang angeordnet sind, bewegen sich die Verdrängerelemente auf unterschiedlichen gekrümmten Bahnen, derart, dass sich die Öffnungen 3a, b, c auseinander bewegen und die Querschnittsfläche der resultierenden Gesamtöffnung 4 kleiner wird. Der Mittelpunkt M der resultierenden Gesamtöffnung fluchtet immer noch mit dem Mittelpunkt M der Ausstoßöffnung 8. Durch eine entsprechende Überlagerung der Öffnungen 3a, b, c ergibt sich ein abgerundetes Dreieck. Fig. 4C zeigt die in Fig. 4A, 4B gezeigte Formvorrichtung, bei der das Drehteil 9 um einen Winkel α von ca. 20° im Vergleich zur Fig. 4A weitergedreht wurde. Wie beim Vergleich der Fig. 4B und 4C zu erkennen ist, bewegen sich die Kanten 7 der Öffnungen 3a, b, c, die die Gesamtöffnung 4 begrenzen, auf den Mittelpunkt M der Gesamtöffnung 4 von drei Seiten zu.

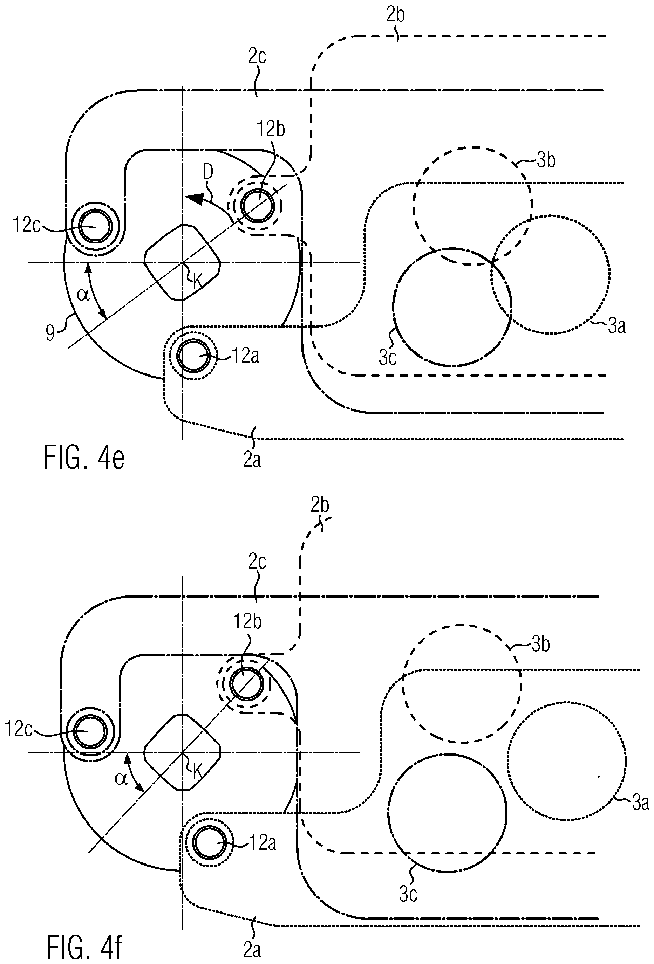

Fig. 4D zeigt für dieses Beispiel einen Drehwinkel α des Drehteils 9 von etwa 26°. Wie deutlich wird, bewegen sich die Verdrängerelemente 2a, b, c auf entsprechenden gekrümmten Bahnen, derart, dass die Öffnungen 3a, b, c sich derart überlagert, dass die Querschnittsfläche der resultierenden Gesamtöffnung 4, d. h. die Schnittmenge der Öffnungen weiter abnimmt und sich die Kanten 7 der Öffnungen, die die Gesamtöffnung 4 begrenzen, weiter auf den Mittelpunkt M der Gesamtöffnung 4 zu bewegen. Fig. 4E zeigt eine Bewegung des Drehteils 9 um einen Winkel α von 37°. Hier ist die Fläche der Gesamtöffnung 4 Null, d. h., dass die Öffnungen 3a, b, c aller Verdrängerelemente keine gemeinsame Schnittmenge, d. h. keine resultierende Gesamtöffnung mehr aufweisen. In dieser Position wird der Lebensmittelstrang abgetrennt. Wie in Fig. 4F dargestellt ist, können sich die Verdrängerelemente 2a, b, c, d noch über diese Position hinaus bewegen,(wobei die Kanten 7 aneinander vorbeigleiten und das Lebensmittelprodukt abschneiden) hier: z.B. bis zu einem Winkel α von z. B. 45° um das Lebensmittel sauber abzutrennen. Auch hier gibt es keine Gesamtöffnung, keine Öffnung 3a, b, c schneidet eine andere Öffnung.

Aus den Positionen 4f oder 4e können die flachen Verdrängerelemente 2a, b, c dann wieder entgegen der Drehrichtung D zurück in die Ausgangsposition A, wie in Fig. 4A dargestellt ist, zurückbewegt werden. Dazu ist das Antriebsteil 9 vorzugsweise in zwei Drehrichtung mittels Servoantrieb antreibbar. Durch die zuvor beschriebene Lagerung der Verdrängerelemente bleiben diese stets korrekt ausgerichtet, hier: horizontal, so dass der entsprechende Mittelpunkt M der Gesamtöffnung 4 stets mit dem Mittelpunkt M der Ausstoßöffnung 8 fluchtet, auch wenn mehrere Stränge parallel zueinander produziert werden, d. h. mehrere Ausstoßöffnungen 8 in Reihe angeordnet sind.

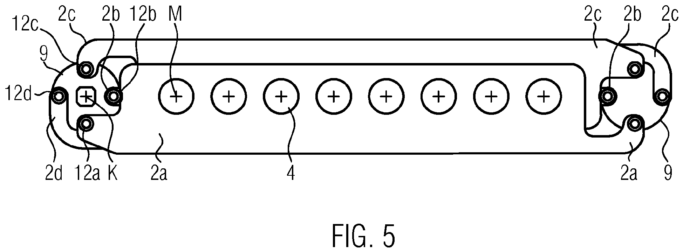

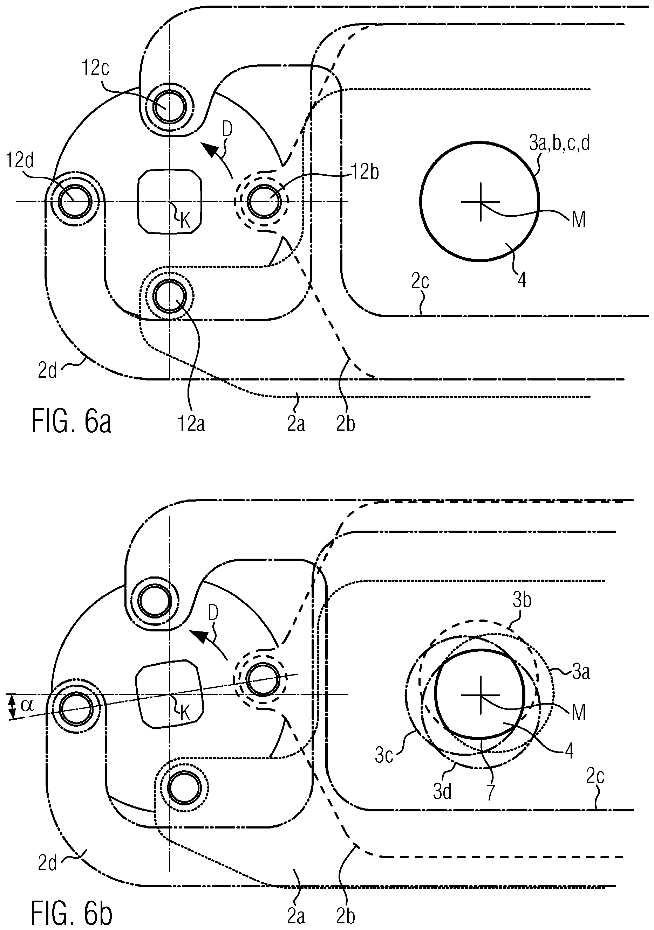

Fig. 5 zeigt ein Ausführungsbeispiel gemäß der vorliegenden Erfindung, das dem im Zusammenhang mit Fig. 3 und 4 gezeigten Ausführungen entspricht, mit der Ausnahme, dass hier vier Verdrängerelemente um jeweils 90° versetzt zueinander um den Umfang des Drehteils 9 angeordnet sind, derart, dass sich als Gesamtöffnung ein Viereck mit abgerundeten Kanten bildet, wenn die Verdrängerelemente 2a, b, c, d relativ zueinander aus einer Öffnungsposition, wie in Fig. 6A-6F gezeigt ist, zueinander entlang einer gekrümmten Bahn bewegen.

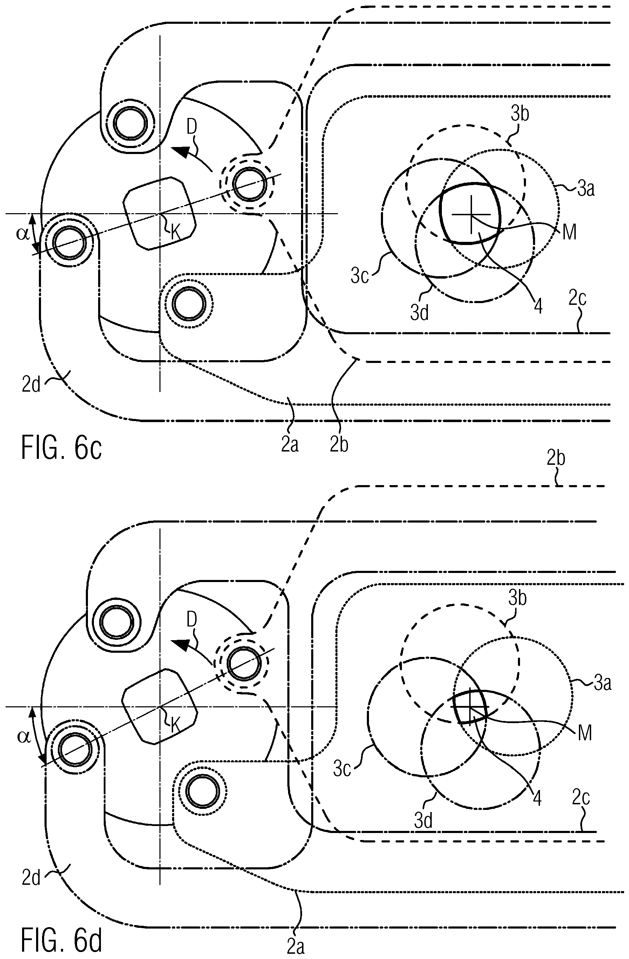

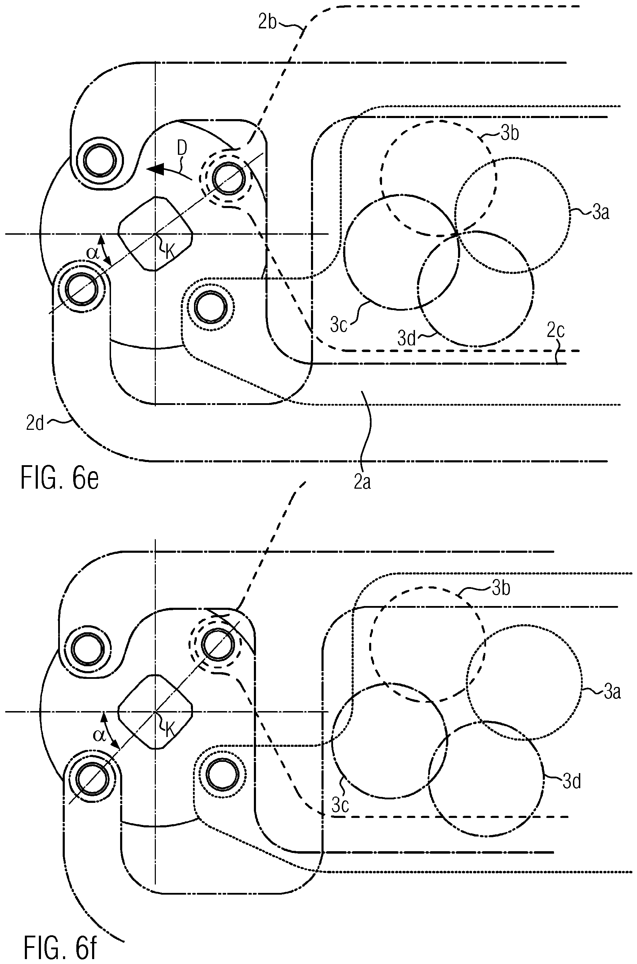

Fig. 6A zeigt einen Drehwinkel von α = 0°, d. h. eine Öffnungsposition, bei der wie auch bevorzugt beschrieben wird, die Querschnittsfläche den vorbestimmten maximalen Querschnitt aufweist, der dem maximalen Querschnitt des Lebensmittelprodukts entspricht. Fig. 6B zeigt einen Drehwinkel α von etwa 8° und die sich daraus verkleinernde resultierende Gesamtöffnung 4. Fig. 6C zeigt einen Drehwinkel von α = 17° und die resultierende Gesamtöffnung. Fig. 6D zeigt einen Drehwinkel von etwa α = 26°. Fig. 6E zeigt einen Drehwinkel α von 36° und entspricht einer Abtrennposition, bei der es keine gemeinsame Schnittmenge aller Öffnungen 3a, b, c, d mehr gibt d.h. keine Gesamtöffnung 4 und der Lebensmittelstrang abgetrennt wird. Die Fig. 6F zeigt einen Drehwinkel α von etwa 46°, bei dem es ebenfalls keine resultierende Gesamtöffnung der sich überlagernden Öffnungen 3a, b, c, d gibt. Die beiden Ausführungsbeispiele wurden im Zusammenhang mit drei bzw. vier Verdrängerelementen gezeigt. Vorzugsweise ist n <= 6.

Die Öffnungen 3a,b,c,d weisen vorzugsweise einen geschlossenen Umfang auf und sind vorzugsweise rund ausgebildet. Dies ist besonders vorteilhaft, da, wenn sich alle Öffnungen 3a, b, c, d zu 100 % überlagern, die Gesamtöffnung ebenfalls einen runden Querschnitt aufweist. Bei Bewegen der Verdrängerelemente auf einer gekrümmten Bahn verändert sich die anfänglich runde Durchgangsöffnung, zu einem abgerundeten Vieleck, so dass eine schöne abgerundete Form des erzeugten Produkts erzeugt werden kann. Die Öffnungen können jedoch auch eine von der Kreisform abweichende Form aufweise, vorzugsweise mit abgerundeten bzw. gekrümmten Abschnitten.

Es ist aber auch möglich, dass die Ankopplungspunkte 12 auf dem Drehteil nicht alle auf dem gleichen Radius angeordnet sind, sondern unterschiedliche Abstände zur Mittelachse K aufweisen, wodurch die Form der Produkte beeinflusst werden kann. Wenn beispielsweise die Öffnungen 3a, b, c, d in den Verdrängerelementen nicht rund sind, sondern eine davon abweichende Form aufweisen, kann die Form ebenfalls beeinflusst werden. Werden ungleiche Abstände der Ankopplungspunkte 12 zum Mittelpunkt K des Drehteils 9 gewählt, kann gegebenenfalls bei einem geschwindigkeitsveränderbarem Antrieb des Drehteils 9 die Geschwindigkeit derart gesteuert werden, dass Produkte einer gewünschten Form, z. B. wieder rund, hergestellt werden können. Die Anordnung und Ausgestaltung der Öffnungen hängt dabei im Wesentlichen von der gewünschten Form ab. Vorteilhafterweise sind die Öffnungen aber rund und auf gleichem Radius angeordnet.

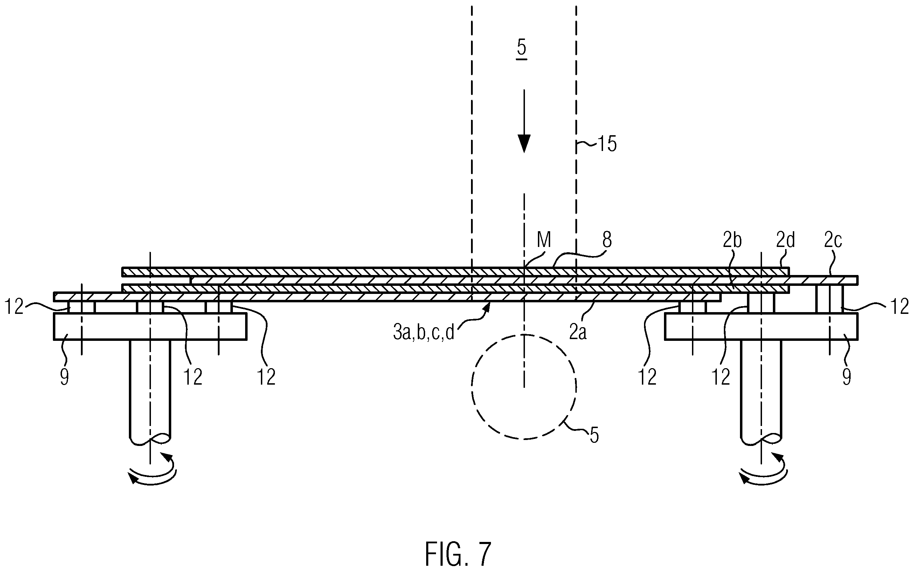

Fig. 7 entspricht dem in Fig. 5 und 6 gezeigten Ausführungsbeispiel mit vier Verdrängerelementen, die an entsprechenden Ankopplungspunkten 12 mit dem Drehteil 9 verbunden sind. Die Ankopplungspunkte 12 befinden sich hier auf der Vorderseite des Drehteils 9, die dem Abfüllorgan 15 gegenüberliegt. Der Antrieb des Drehteils 9, hier: des in Fig. 7 dargestellten linken Drehteils, bewegt sich innerhalb eines bestimmten Winkels a, hier z. B. < 90°, hin und zurück, da sonst die Ankoppelpunkte 12 , d. h. die Kopplungsachsen mit den folgenden Verdrängerelementen kollidieren können. Da in diesem Ausführungsbeispiel vier Verdrängerelementen jeweils um 90° versetzt auf dem Drehteil 9 angeordnet sind, kann sich das Drehteil also um weniger als 90° vor- und zurückbewegen. Dieser Winkelbereich reicht jedoch aus, die Öffnungen von einer Öffnungsposition O in eine Abtrennposition A, wie zuvor erläutert, zu bringen.

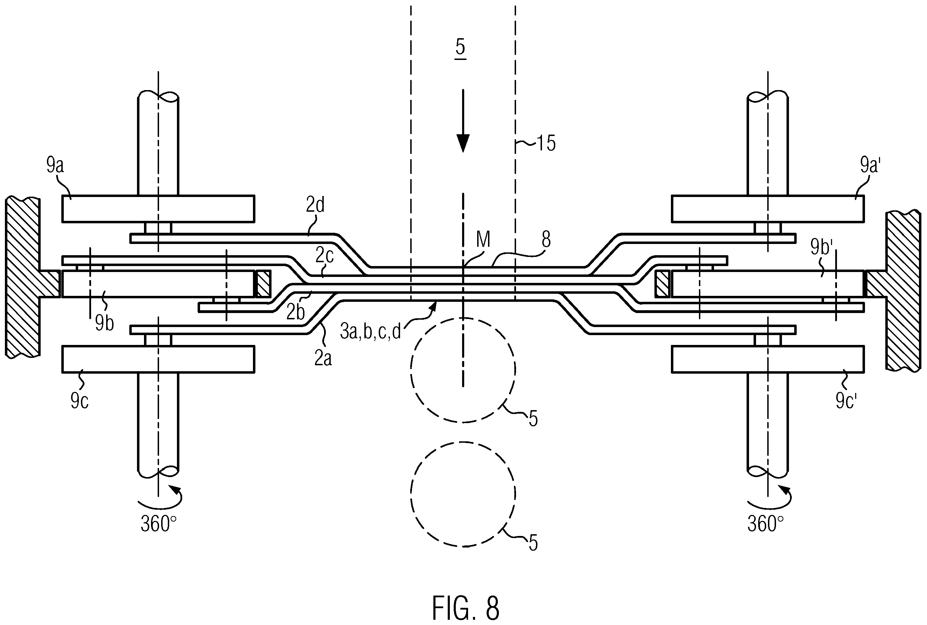

Fig. 8 zeigt eine weitere Ausführungsform der vorliegenden Erfindung, die im Wesentlichen den vorherigen Ausführungsbeispielen entspricht, mit der Ausnahme, dass das Drehteil 9 kontinuierlich in Drehrichtung D gedreht werden kann.

Zu diesem Zweck weist der Bewegungsmechanismus 6 an den gegenüberliegenden Enden der Verdrängerelemente 2a, b, c, d jeweils mehrere Drehteile 9a, b, c, 9a', b', c' auf. Die Verdrängerelemente 2a, b, c, d sind so an die Drehteile angekoppelt, dass jeweils nur ein flaches Verdrängerelement an seinem Endbereich an einer Seite (die Seite , die Senkrecht zur Drehachse liegt) eines Drehteils angekoppelt ist. Das Verdrängerelement 2a ist an der Oberseite des Drehteils 9c angekoppelt, das Verdrängerelement 2d ist an der Unterseite des Drehteils 9a angekoppelt. Gleichzeitig ist das Verdrängerelement 2a auch an der Oberseite des Drehteils 9c' angekoppelt, und das Verdrängerelement 2d an der Unterseite des Drehteils 9a'.

Das Verdrängerelement 2b ist an der Unterseite des Drehteils 9b sowie an der Unterseite des Drehteils 9b' angekoppelt. Das Verdrängerelement 2c ist an der Oberseite des Drehteils 9b sowie an der Oberseite des Drehteils 9b' angekoppelt. Jedes Verdrängerelement ist zumindest mit einem Endbereich an einem angetriebenen Drehteil angeordnet. So können beispielsweise die Drehteile 9a, b, c angetrieben sein und die Drehteile 9a', 9b' und 9c' als Führung dienen. Der Antrieb des Drehteils 9b ist hier einfachheitshalber nicht gezeichnet. Das Drehteil 9b kann beispielsweise mittels Zahnradantrieb oder Riemenantrieb bewegt werden.

Die vorherigen Ausführungsbeispiele wurden mit drei und vier Verdrängerelementen beschrieben. Geeignet ist jedoch auch die Verwendung von fünf oder sechs Verdrängerelementen. Die Füllmaschine weist weiter eine Steuerung auf, die sowohl den Bewegungsmechanismus 6 als auch die Fördereinrichtung für die pastöse Lebensmittelmasse 14 ansteuert.

Die Steuereinrichtung kann dabei die Steuereinrichtung der Füllmaschine sein. Es ist jedoch auch möglich, dass die Steuereinrichtung der Füllmaschine mit einer separaten Steuerung für den Bewegungsmechanismus 6 gekoppelt ist.

Die Steuerung passt dabei in Abhängigkeit einer gewünschten Form des Lebensmittelprodukts die Stellung der einzelnen Verdrängerelemente zu einem bestimmten Zeitpunkt und die Ausstoßgeschwindigkeit des Lebensmittels aneinander an. Die Ausstoßgeschwindigkeit kann konstant sein oder jedoch variieren, d. h., dass die Ausstoßgeschwindigkeit beispielsweise abnimmt, wenn sich die Verdrängerelemente einer Abtrennposition A nähern. Vorteilhafterweise wird der Lebensmittelstrang portionierend beigestellt, d. h., dass im einfachsten Fall der Ausstoß des Lebensmittelstrangs komplett gestoppt wird, wenn sich die Verdrängerelemente in der Abtrennposition A befinden, d.h. in einer Position in der der Strang nicht durch eine Gesamtöffnung gefördert werden kann. Der Betrieb mit kontinuierlichem Lebensmittelausstoß ist ebenfalls möglich. Hierbei kann z.B. die gesamte Formvorrichtung in einem gewissen Bereich in Transportrichtung T mitlaufend gestaltet sein, und das Ausstoßorgan muss teleskopartig gestaltet sein, so dass das oberste Verdrängerelement und die Ausstoßöffnung immer dicht beieinander bleiben.

Nachfolgend wird das Verfahren gemäß der vorliegenden Erfindung unter Bezugnahme der Fig. 3 und 4 näher erläutert.

Bei dem erfindungsgemäßen Verfahren wird das Füllgut aus dem Trichter 3 über die Fördereinrichtung 14 in das Füllorgan 15 gefördert. Das Füllorgan 15 umfasst hier beispielsweise den Füllstromteiler 16, über den der Lebensmittelstrang über mehrere, hier: z. B. acht Ausstoßöffnungen ausgestoßen werden kann.

Beim Herstellen eines geformten Lebensmittelprodukts befinden sich die Verdrängerelemente zunächst in einer Position, in der sich die Öffnungen 3a, b, c der Verdrängerelemente 2a, b, c, d nicht überlagern, derart, dass es keine gemeinsame Gesamtöffnung 4 gibt, wie beispielsweise in den Fig. 4F und 4E gezeigt ist.

In einer entsprechenden Abtrennposition A, bei der die Verdrängerelemente überdeckend verschlossen werden können, wird der Lebensmittelstrang abgetrennt.

Das Drehteil 9 wird nun entgegen der Drehrichtung D um einen bestimmten Winkel gedreht, derart, dass, wie aus Fig. 4D erkannt werden kann, die Öffnungen 3a, b, c sich so überlagern, dass es eine gemeinsame Öffnungsschnittmenge also Gesamtöffnung 4 gibt, deren Mittelpunkt M mit dem Mittelpunkt M der Ausstoßöffnung fluchtet. Die Gesamtöffnung 4 wird durch die Kanten 7 der entsprechenden Öffnungen 3a, b, c begrenzt. Dreht sich das Drehteil weiter entgegen der Drehrichtung D, vergrößert sich der Querschnitt der Gesamtöffnung 4, wie aus den Fig. 4C und 4B hervorgeht. Das Drehteil 9 wird solange entgegen Drehrichtung D gedreht, bis die Querschnittsfläche der Gesamtöffnung 4 einen vorbestimmten maximalen Querschnitt aufweist. In diesem Fall überlagern sich die einzelnen Öffnungen 3a, b, c zu 100 % und bilden eine kreisförmige Gesamtöffnung.

Während der Bewegung der Verdrängerelemente wird der Lebensmittelstrang durch die Formvorrichtung bewegt und durch die Querschnittsveränderung geformt.

Ausgehend von der Öffnungsposition A in Fig. 4A wird dann beispielsweise das Drehteil 9 in entgegengesetzter Richtung, d. h. in Drehrichtung D, gedreht, derart, dass sich die Querschnittsfläche der Gesamtöffnung 4 wieder verkleinert, bis es, wie in Fig. 4E gezeigt ist, keine Gesamtöffnung 4 mehr gibt. Vorteilhafterweise werden dann die Verdrängerelemente noch ein Stück weiter in Drehrichtung D bewegt, um den Füllgutstrom sauber abzutrennen bzw. abzuschneiden, siehe Fig. 4F. Grundsätzlich ist es jedoch ausreichend, wenn die Verdrängerelemente in eine Abtrennposition, wie in Fig. 4E gezeigt ist, gebracht werden. Wesentlich ist nur, dass dann die Querschnittsfläche der Gesamtöffnung 0 ist. Die Ausstoßgeschwindigkeit des Lebensmittelstrangs kann in einer Abtrennposition im Vergleich zur Öffnungsposition (Fig. 4A) reduziert werden oder auf 0 gesetzt werden, derart, dass sich das pastöse Lebensmittel nicht aufstaut, wenn die Formvorrichtung geschlossen ist.

Der zuvor beschriebene Vorgang wiederholt sich dann kontinuierlich. Während bei dieser Ausführungsform die einen Endbereiche der Verdrängerelemente von dem Antriebsteil 9 angetrieben werden, werden die gegenüberliegenden Endbereiche geführt, hier vorzugsweise ebenfalls durch ein mitlaufendes Drehteil. Bei den zuvor beschriebenen Ausführungsformen werden die Verdrängerelemente mit Hilfe eines Drehteils auf einer gekrümmten Bahn bewegt bzw. gedreht. Es ist jedoch auch möglich, die Verdrängerelemente in einer entsprechenden Kurvenführung mit Hilfe eines Antriebs zu bewegen.

## Patentansprüche

1. Formvorrichtung (1) zum Formen und Unterteilen eines pastösen Lebensmittelstrangs (5) mit
- in Transportrichtung (T) des Lebensmittelstrangs (5) übereinander liegenden flachen Verdrängerelementen (2a, b, c, d), die jeweils mindestens eine Öffnung (3a, b, c, d) aufweisen, durch die der Lebensmittelstrang (5) in Transportrichtung (T) bewegbar ist und einen
- Bewegungsmechanismus (6) zum Bewegen der flachen Verdrängerelemente (2a, b, c, d), derart, dass die jeweiligen Öffnungen (3a, b, c, d) relativ zueinander bewegbar sind, so dass sich die Querschnittsfläche der resultierenden Gesamtöffnung (4) der sich überlagernden Öffnungen (3a, b, c, d) ändert,
**gekennzeichnet durch**
mehr als zwei in Transportrichtung (T) übereinander liegende flache Verdrängerelemente (2a, b, c, d) und **dadurch, dass**
der Bewegungsmechanismus (6) zum Bewegen der flachen Verdrängerelemente (2a, b, c, d) auf jeweiligen gekrümmten Bahnen ausgebildet ist.

2. Formvorrichtung (1) nach Anspruch 1, **dadurch gekennzeichnet, dass** der Bewegungsmechanismus (6) derart ausgebildet ist, dass die flachen Verdrängerelemente (2a, b, c, d) in eine Abtrennposition (A) bewegbar sind, in der die Öffnungen (3a, b, c, d) derart zueinander ausgerichtet sind, dass es keine Gesamtöffnung (4) gibt und
in eine Öffnungsposition (O) bewegbar sind, in der die Querschnittsfläche der Gesamtöffnung (4) einen vorbestimmten maximalen Querschnitt aufweist.

3. Formvorrichtung (1) nach Anspruch 2, **dadurch gekennzeichnet, dass** bei der Bewegung von n flachen Verdrängerelementen (2a, b, c, d) aus der Öffnungsposition (O) in die Abtrennposition (A) die Kanten (7) der Öffnungen (3a, b, c, d), die die Gesamtöffnung (4) begrenzen, sich von n Seiten in Richtung Mittelpunkt (M) der Gesamtöffnung bewegen können und bei Bewegung der n flachen Verdrängerelemente aus der Abtrennposition (A) in die Öffnungsposition (O) die Kanten (7) der Öffnungen (3a, b, c, d) sich nach n Seiten vom Mittelpunkt (M) weg bewegen können.

4. Formvorrichtung (1) nach mindestens einem der Ansprüche 1 bis 3, **dadurch gekennzeichnet, dass** die Öffnungen (3a, b, c, d) eine Querschnittsfläche aufweisen, die annähernd der Querschnittsfläche des zugeführten Lebensmittelstrangs (5), bzw. der den Lebensmittelstrang erzeugenden Ausstoßöffnung (8) ±10% entspricht.

5. Formvorrichtung (1) nach mindestens einem der Ansprüche 1 bis 4, **dadurch gekennzeichnet, dass** die Öffnungen (3a, b, c, d) einen geschlossenen Umfang aufweisen und/oder vorzugsweise rund oder oval ausgebildet sind oder zumindest gekrümmte Abschnitte aufweisen.

6. Formvorrichtung (1) nach mindestens einem der Ansprüche 1 bis 5, **dadurch gekennzeichnet, dass** die jeweiligen Verdrängerelemente (2a, b, c, d) jeweils mehrere nebeneinander angeordnete Öffnungen (3a, b, c, d) für mehrere Lebensmittelstränge (5) aufweisen.

7. Formvorrichtung (1) nach mindestens einem der Ansprüche 1 bis 6, **dadurch gekennzeichnet, dass** der Bewegungsmechanismus (6) mindestens ein Drehteil (9a, b), insbesondere eine drehbare Scheibe, aufweist, an dem oder an denen die flachen Verdrängerelemente (2a, b, c, d) drehbar gelagert sind, wobei vorzugsweise die flachen Verdrängerelemente (2a, b, c, d) um den Umfang des Drehteils verteilt angekoppelt sind.

8. Formvorrichtung (1) nach Anspruch 7, **dadurch gekennzeichnet, dass** die flachen Verdrängerelemente (2a, b, c, d) an ihren beiden gegenüberliegenden Endbereichen an einem jeweiligen Drehteil (9) drehbar gelagert sind.

9. Formvorrichtung (1) nach Anspruch 7 oder 8, **dadurch gekennzeichnet, dass** zumindest ein Drehteil (9) antreibbar ist und insbesondere in zwei Drehrichtungen antreibbar ist, und/oder mehrere Drehteile (9) antreibbar sind.

10. Formvorrichtung (1) nach mindestens Anspruch 7, **dadurch gekennzeichnet, dass** der Bewegungsmechanismus (6) an einer Seite mehrere Drehteile (9) aufweist, wobei
an einer Vorder- oder Rückseite der Drehteile (9a, b) jeweils höchstens ein flaches Verdrängerelement (2a, b, c, d) an seinem Endbereich angekoppelt ist und an seinem anderen Endbereich auf einer entsprechenden Bahn geführt wird.

11. Formvorrichtung (1) nach mindestens Anspruch 7, **dadurch gekennzeichnet, dass** die Ankopplungspunkte (12) der flachen Verdrängerelemente (2a, b, c, d) auf dem Drehteil (6) unterschiedliche Abstände zur Mittelachse (A) des Drehteils aufweisen.

12. Formvorrichtung (1) nach mindestens einem der Ansprüche 1 bis 11, **dadurch gekennzeichnet, dass** die Vorrichtung eine Steuerung (11) aufweist, die den Bewegungsmechanismus, insbesondere die Stellung der flachen Verdrängerelemente in Abhängigkeit der Zeit und die Ausstoßgeschwindigkeit des Lebensmittelstrangs steuert.

13. Füllmaschine (10) zum Herstellen geformter Lebensmittel mit einer Formvorrichtung zum Formen und Unterteilen eines Lebensmittelstrangs nach mindestens einem der Ansprüche 1 bis 12 sowie mit einem Fülltrichter (13) zur Aufnahme von pastöser Lebensmittelmasse (5), einer Fördereinrichtung (14), die die pastöse Lebensmittelmasse in ein Abfüllorgan (15) mit mindestens einer Ausstoßöffnung (8) fördert, wobei die Verdrängerelemente (2a, b, c, d) der Formvorrichtung in Transportrichtung (T) hinter der Ausstoßöffnung (8) angeordnet sind.

14. Füllmaschine (10) nach Anspruch 13, **dadurch gekennzeichnet, dass** der Mittelpunkt (M) der jeweiligen Gesamtöffnung (4) der sich überlagernden Öffnungen (3a, b, c, d) und der Mittelpunkt der jeweiligen Ausstoßöffnung (8) des Abfüllorgans fluchtend angeordnet sind.

15. Füllmaschine (10) nach Anspruch 13 oder 14, **dadurch gekennzeichnet, dass** das Abfüllorgan (15) einen Füllstromteiler (16) aufweist, durch den die pastöse Lebensmittelmasse zu mehreren Ausstoßöffnungen (8) gefördert wird und die flachen Verdrängerelemente (2a, b, c, d) jeweils mehrere Öffnungen aufweisen.

16. Füllmaschine (10) nach mindestens einem der Ansprüche 13 bis 15, **dadurch gekennzeichnet, dass** die Füllmaschine (1) eine Steuereinrichtung (11) umfasst, die den Bewegungsmechanismus (6) und die Fördereinrichtung (14) ansteuert.

17. Verfahren zum Herstellen eines geformten Lebensmittelprodukts mit einer Füllmaschine (10) nach mindestens einen der Ansprüche 13 bis 16 mit folgenden Schritten:
- Ansteuern des Bewegungsmechanismus (6) derart, dass mehr als zwei flache Verdrängerelemente (2a, b, c, d) aus einer Abtrennposition (A) in eine Öffnungsposition (O) auf einer gekrümmten Bahn bewegt werden,
- wobei sich die flachen Verdrängerelemente (2a, b, c, d) in der Abtrennposition derart überlagern, dass es keine resultierenden Gesamtöffnung (4) der sich überlagernden Öffnungen (3a, b, c, d) gibt und der Lebensmittelstrang abgetrennt wird und in einer Öffnungsposition (O) die Querschnittsfläche der Gesamtöffnung (4) einen vorbestimmten maximalen Querschnitt aufweist, und
- sich die flachen Verdrängerelemente (2a, b, c, d) dann wieder auf einer gekrümmten Bahn aus der Öffnungsposition (O) in die Abtrennposition (A) bewegen,
wobei die pastöse Lebensmittelmasse (5) durch die Ausstoßöffnung (8) des Abfüllorgans (15) und durch die sich erweiternde oder verjüngende Gesamtöffnung (4) der flachen Verdrängerelemente (2a, b, c, d) hindurch bewegt wird.

18. Verfahren nach Anspruch 17, **dadurch gekennzeichnet, dass** die pastöse Lebensmittelmasse (5) kontinuierlich oder portionsweise aus der Ausstoßöffnung (8) ausgestoßen wird, wobei in der Abtrennposition (A) die Relativgeschwindigkeit des Lebensmittelstrangs (5) zu den flachen Verdrängerelementen in Transportrichtung (T) herabgesetzt wird, vorzugsweise 0 ist.

19. Verfahren nach mindestens einem der Ansprüche 17 oder 18, **dadurch gekennzeichnet, dass** zum Abtrennen des Lebensmittelstrangs die Öffnungen (3a, b, c, d) sich entweder derart überlagern, dass Kanten (7), die die jeweiligen Öffnungen (3a, b, c, d) begrenzen, aneinander vorbeigleiten derart, dass das Lebensmittelprodukt abgeschnitten wird oder, dass die Verdrängerelemente (2a, b, c, d) nur soweit auf der gekrümmten Bahn bewegt werden, bis die Fläche der Gesamtöffnung (4) Null wird.

## Claims

1. Forming device (1) for forming and partitioning a pasty food strand (5) with
- two flat displacement elements (2a, b, c, d) superposed in the direction of transport (T) of said food strand (5), each having at least one opening (3a, b, c, d) through which said food strand (5) is movable in said direction of transport (T) and a
- movement mechanism (6) for moving said flat displacement elements (2a, b, c, d), such that said respective openings (3a, b, c, d) are movable relative to each so that the cross-sectional area of the resulting overall opening (4) of said superposed openings (3a, b, c, d) changes
**characterized by**
more than two flat displacement elements (2a, b, c, d) superposed in the direction of transport (T) of said food strand (5), and in that
the movement mechanism (6) is formed for moving said flat displacement elements (2a, b, c, d) on respective curved paths

2. Forming device (1) according to claim 1, **characterized in that** said movement mechanism (6) is configured such that said flat displacement elements (2a, b, c, d) are movable to a severing position (A) in which said openings (3a, b, c, d) are aligned to each other such that no overall opening (4) exists and
are movable to an open position (O) in which the cross-sectional area of said overall opening (4) has a predetermined maximum cross-section.

3. Forming device (1) according to claim 2, **characterized in that** during the motion of n flat displacement elements (2a, b, c, d) from said open position (O) to said severing position (A), the edges (7) of said openings (3a, b, c, d) defining said overall opening (4) can move from n sides in the direction toward said center M of said overall opening and during the motion of n flat displacement elements from said severing position (A) to said open position (O), said edges (7) of said openings (3a, b, c, d) can move toward n sides away from said center (M).

4. Forming device (1) according to at least one of the claims 1 to 3, **characterized in that** said openings (3a, b, c, d) have a cross-sectional area that corresponds approximately to the cross-sectional area of said supplied food strand (5), or to said extrusion opening (8) creating said food strand ± 10%, respectively.

5. Forming device (1) according to at least one of the claims 1 to 4, **characterized in that** said openings (3a, b, c, d) have an enclosed circumference and/or are preferably formed round or oval or at least have curved sections.

6. Forming device (1) according to at least one of the claims 1 to 5, **characterized in that** said respective displacement elements (2a, b, c, d) each comprise multiple adjacently disposed openings (3a, b, c, d) for multiple food strands (5).

7. Forming device (1) according to at least one of the claims 1 to 6, **characterized in that** said movement mechanism (6) comprises at least one rotary member (9a, b), in particular a rotatable disc on which said flat displacement elements (2a, b, c, d) are rotatably mounted, where preferably said flat displacement elements (2a, b, c, d) are coupled being distributed about the circumference of said rotary member.

8. Forming device (1) according to claim 7, **characterized in that** said flat displacement elements (2a, b, c, d) are at their two oppositely disposed end portions rotatably mounted on a respective rotary member (9).

9. Forming device (1) according to claim 7 or 8, **characterized in that** at least one rotary member (9) can be driven and can in particular be driven in two directions of rotation, and/or multiple rotary members (9) can be driven.

10. Forming device (1) according to at least claim 7, **characterized in that** said movement mechanism (6) comprises multiple rotary members (9) on one side, where
at most one flat displacement element (2a, b, c, d) is respectively coupled on its end portion at a front or rear side of said rotary members (9a, b) and is at its other end portion guided on a respective path.

11. Forming device (1) according to at least claim 7, **characterized in that** said coupling points (12) of said flat displacement elements (2a, b, c, d) on said rotary member (6) exhibit varying distances to said central axis (A) of said rotary member.

12. Forming device (1) according to at least one of the claims 1 to 11, **characterized in that** said device comprises a controller (11) which controls said movement mechanism, in particular the position of said flat displacement elements in dependence of time and the extrusion speed of said food strand.

13. Filling machine (10) for producing formed food with a forming device for forming and partitioning a food strand according to at least one of the claims 1 to 12 and with a hopper (13) for receiving pasty food mass (5), a conveying device (14) that conveys said pasty food mass into a filling member (15) with at least one extrusion opening (8), where said displacement elements (2a, b, c, d) of said forming device are in the direction of transport (T) disposed downstream of said extrusion opening (8).

14. Filling machine (10) according to claim 13, **characterized in that** said center (M) of said respective overall opening (4) of said superposed openings (3a, b, c, d) and said center of said respective extrusion opening (8) of said filling member are arranged in alignment.

15. Filling machine (10) according to claim 13 or 14, **characterized in that** said filling member (15) comprises a filling flow divider (16) through which said pasty food mass is conveyed to multiple extrusion openings (8) and said flat displacement elements (2a, b, c, d) each have several openings.

16. Filling machine (10) according to at least one of the claims 13 to 15, **characterized in that** said filling machine (1) comprises a control device (11) which actuates said movement mechanism (6) and said conveying device (14).

17. Method for producing a formed food product with a filling machine (10) according to at least one of the claims 13 to 16 comprising the steps of:
- actuating said movement mechanism (6) such that more than two flat displacement elements (2a, b, c, d) are moved from a severing position (A) to an open position (O) on a curved path,
- where said flat displacement elements (2a, b, c, d) are in said severing position superposed such that no resulting overall opening (4) of said superposed openings (3a, b, c, d) exists and said food strand is severed and said cross-sectional area of said overall opening (4) in an open position (O) has a predetermined maximum cross-section, and
- said flat displacement elements (2a, b, c, d) then again move on a curved path from said open position (O) to said severing position (A),
where said pasty food mass (5) is moved through said extrusion opening (8) of said filling member (15) and through said expanding or tapering overall opening (4) of said flat displacement elements (2a, b, c, d).

18. Method according to claim 17, **characterized in that** said pasty food mass (5) is extruded continuously or in portions from said extrusion opening (8), where in said severing position (A), the speed of said food strand (5) relative to said flat displacement elements is in the direction of transport (T) reduced, preferably reduced to 0.

19. Method according to at least one of claims 17 or 18, **characterized in that** said openings (3a, b, c, d) are for severing said food strand superposed such that edges (7) defining said respective openings (3a, b, c, d) slide past one another such that said food product is cut off, or that said displacement elements (2a, b, c, d) are moved on the curved path only until the area of said overall opening (4) becomes zero.

## Revendications

1. Dispositif de façonnage (1) permettant de façonner et de diviser un brin de produit alimentaire (5) pâteux, comprenant
- des éléments déplaceurs (2a, b, c, d) plats superposés dans la direction de transport (T) du brin de produit alimentaire (5), qui comportent chacun au moins une ouverture (3a, b, c, d) à travers laquelle le brin de produit alimentaire (5) peut être déplacé dans la direction de transport (T), et
- un mécanisme de déplacement (6) permettant de déplacer les éléments déplaceurs (2a, b, c, d) plats de façon que les ouvertures (3a, b, c, d) respectives puissent être déplacées les unes par rapport aux autres de sorte que l'aire de section de l'ouverture totale (4) résultant de la superposition des ouvertures (3a, b, c, d) se modifie,
**caractérisé par** plus de deux éléments déplaceurs (2a, b, c, d) plats superposés dans la direction de transport (T) et en ce que le mécanisme de déplacement (6) est exécuté pour déplacer les éléments déplaceurs (2a, b, c, d) plats sur des trajectoires curvilignes respectives.

2. Dispositif de façonnage (1) selon la revendication 1, **caractérisé en ce que** le mécanisme de déplacement (6) est exécuté de façon que les éléments déplaceurs (2a, b, c, d) plats puissent être déplacés dans une position de coupe (A) dans laquelle les ouvertures (3a, b, c, d) sont alignées les unes par rapport aux autres de sorte qu'il n'existe pas d'ouverture totale (4), et puissent être déplacés dans une position d'ouverture (O) dans laquelle l'aire de section de l'ouverture totale (4) a une section maximale prédéterminée.

3. Dispositif de façonnage (1) selon la revendication 2, **caractérisé en ce que**, lors du déplacement de n éléments déplaceurs (2a, b, c, d) plats de la position d'ouverture (O) dans la position de coupe (A), les bords (7) des ouvertures (3a, b, c, d) qui limitent l'ouverture totale (4) peuvent se déplacer de n côtés en direction du centre (M) de l'ouverture totale et, lors du déplacement des n éléments déplaceurs plats de la position de coupe (A) dans la position d'ouverture (O), les bords (7) des ouvertures (3a, b, c, d) peuvent s'éloigner du centre (M) vers n côtés.

4. Dispositif de façonnage (1) selon au moins une des revendications 1 à 3, **caractérisé en ce que** les ouvertures (3a, b, c, d) ont une aire de section qui correspond à peu près à l'aire de section, ± 10%, du brin de produit alimentaire (5) amené resp. de l'ouverture de sortie (8) produisant le brin de produit alimentaire.

5. Dispositif de façonnage (1) selon au moins une des revendications 1 à 4, **caractérisé en ce que** les ouvertures (3a, b, c, d) ont une circonférence fermée et/ou sont de préférence de forme ronde ou ovale ou présentent au moins des segments courbes.

6. Dispositif de façonnage (1) selon au moins une des revendications 1 à 5, **caractérisé en ce que** les éléments déplaceurs (2a, b, c, d) respectifs comportent chacun plusieurs ouvertures (3a, b, c, d) agencées les unes à côté des autres pour plusieurs brins de produit alimentaire (5).

7. Dispositif de façonnage (1) selon au moins une des revendications 1 à 6, **caractérisé en ce que** le mécanisme de déplacement (6) comprend au moins un élément rotatif (9a, b), notamment un disque rotatif, sur lequel ou sur lesquels les éléments déplaceurs (2a, b, c, d) plats sont montés de manière rotative, les éléments déplaceurs (2a, b, c, d) plats étant de préférence accouplés de manière répartie sur la circonférence de l'élément rotatif.

8. Dispositif de façonnage (1) selon la revendication 7, **caractérisé en ce que** les éléments déplaceurs (2a, b, c, d) plats sont montés de manière rotative sur un élément rotatif (9) respectif au niveau de leurs deux zones d'extrémité opposées.

9. Dispositif de façonnage (1) selon la revendication 7 ou 8, **caractérisé en ce qu'**au moins un élément rotatif (9) peut être entraîné, et peut être entraîné notamment dans deux sens de rotation, et/ou plusieurs éléments rotatifs (9) peuvent être entraînés.

10. Dispositif de façonnage (1) selon au moins la revendication 7, **caractérisé en ce que** le mécanisme de déplacement (6) comprend plusieurs éléments rotatifs (9) sur un côté, un élément déplaceur (2a, b, c, d) plat au maximum étant à chaque fois accouplé, au niveau de sa zone d'extrémité, sur un côté antérieur ou postérieur des éléments rotatifs (9a, b), et étant guidé sur une trajectoire correspondante au niveau de son autre zone d'extrémité.

11. Dispositif de façonnage (1) selon au moins la revendication 7, **caractérisé en ce que** les points d'accouplement (12) des éléments déplaceurs (2a, b, c, d) plats sur l'élément rotatif (6) présentent des distances différentes par rapport à l'axe (A) de l'élément rotatif.

12. Dispositif de façonnage (1) selon au moins une des revendications 1 à 11, **caractérisé en ce que** le dispositif comprend une commande (11) qui commande le mécanisme de déplacement, notamment la position des éléments déplaceurs plats en fonction du temps et la vitesse de sortie du brin de produit alimentaire.

13. Machine de remplissage (10) pour la fabrication de produits alimentaires façonnés comprenant un dispositif de façonnage permettant de façonner et de diviser un brin de produit alimentaire selon au moins une des revendications 1 à 12, ainsi qu'une trémie de remplissage (13) destinée à la réception d'une masse de produit alimentaire (5) pâteux, un dispositif de transport (14) qui transporte la masse de produit alimentaire pâteux dans un organe de soutirage (15) pourvu d'au moins une ouverture de sortie (8), les éléments déplaceurs (2a, b, c, d) du dispositif de façonnage étant disposés derrière l'ouverture de sortie (8) dans la direction de transport (T).

14. Machine de remplissage (10) selon la revendication 13, **caractérisée en ce que** le centre (M) de l'ouverture totale (4) respective des ouvertures (3a, b, c, d) superposées et le centre de l'ouverture de sortie (8) respective de l'organe de soutirage sont alignés.

15. Machine de remplissage (10) selon la revendication 13 ou 14, **caractérisée en ce que** l'organe de soutirage (15) comporte un répartiteur de flux de remplissage (16) à travers lequel la masse de produit alimentaire pâteux est transportée vers plusieurs ouvertures de sortie (8) et les éléments déplaceurs (2a, b, c, d) plats comportent chacun plusieurs ouvertures.

16. Machine de remplissage (10) selon au moins une des revendications 13 à 15, **caractérisée en ce que** la machine de remplissage (10) comprend un dispositif de commande (11) qui commande le mécanisme de déplacement (6) et le dispositif de transport (14).

17. Procédé de fabrication d'un produit alimentaire façonné avec une machine de remplissage (10) selon au moins une des revendications 13 à 16, comprenant les étapes suivantes :
- commande du mécanisme de déplacement (6) de façon que plus de deux éléments déplaceurs (2a, b, c, d) plats soient déplacés sur une trajectoire curviligne d'une position de coupe (A) dans une position d'ouverture (O),
- les éléments déplaceurs (2a, b, c, d) plats se superposant dans la position de coupe de façon qu'il n'existe pas d'ouverture totale (4) résultant de la superposition des ouvertures (3a, b, c, d) et que le brin de produit alimentaire soit coupé, et l'aire de section de l'ouverture totale (4) présentant, dans une position d'ouverture (O), une section transversale maximale prédéterminée, et
- les éléments déplaceurs (2a, b, c, d) plats étant ensuite déplacés de nouveau sur une trajectoire curviligne de la position d'ouverture (O) dans la position de coupe (A),
dans lequel la masse de produit alimentaire pâteux (5) est déplacée à travers l'ouverture de sortie (8) de l'organe de soutirage (15) et à travers l'ouverture totale (4) des éléments déplaceurs (2a, b, c, d) plats qui s'élargit ou se rétrécit.

18. Procédé selon la revendication 17, **caractérisé en ce que** la masse de produit alimentaire pâteux (5) est éjectée de l'ouverture de sortie (8) de manière continue ou par portions, dans lequel, dans la position de coupe (A), la vitesse relative du brin de produit alimentaire (5) par rapport aux éléments déplaceurs plats dans la direction de transport (T) est réduite, est de préférence nulle.

19. Procédé selon au moins une des revendications 17 ou 18, **caractérisé en ce que**, pour couper le brin de produit alimentaire, soit les ouvertures (3a, b, c, d) se superposent de façon que les bords (7) qui limitent les ouvertures (3a, b, c, d) respectives glissent les uns par rapport aux autres de telle sorte que le produit alimentaire est coupé, soit les éléments déplaceurs (2a, b, c, d) ne sont déplacés sur la trajectoire curviligne que jusqu'à ce que l'aire de l'ouverture totale (4) soit nulle.
